# EUROPÄISCHE PATENTSCHRIFT

(11) **EP 1 431 362 B1**
(45) Veröffentlichungstag und Bekanntmachung des Hinweises auf die Patenterteilung: **13.09.2006**
(21) Anmeldenummer: 03024277.0
(22) Anmeldetag: 23.10.2003
(51) Int. Cl.: C09J 153/00, C08K 5/00

(54) **Haftklebemasse für ein- oder beidseitig haftklebrige Klebefolienstreifen und Verfahren zur Herstellung hierzu**
Pressure sensitive adhesive for one-sided or double-sided adhesive tapes and method for production
Matière auto-adhésive pour des rubans auto-adhésives, collant sur une ou sur les deux faces, et procédé de production

(30) Priorität: 20.12.2002 DE 10261106
(43) Veröffentlichungstag der Anmeldung: 23.06.2004
(73) Patentinhaber: tesa AG, 20253 Hamburg (DE)
(72) Erfinder: Junghans, Andreas, 22457 Hamburg (DE); Krawinkel, Thorsten, 22457 Hamburg (DE)

(56) Entgegenhaltungen:
- WO-A-88/01631
- DATABASE WPI Section Ch, Week 198649 Derwent Publications Ltd., London, GB; Class A18, AN 1986-322308 XP002261673 & JP 61 238879 A (EDA KK), 24. Oktober 1986 (1986-10-24)
- PATENT ABSTRACTS OF JAPAN vol. 1995, no. 06, 31. Juli 1995 (1995-07-31) -& JP 07 070545 A (I C S KK), 14. März 1995 (1995-03-14)

## Beschreibung

Die Erfindung betrifft eine Haftklebemasse für ein- und beidseitig haftklebrige Klebefolienstreifen, welche sich durch dehnendes Verstrecken in der Verklebungsebene rückstands- und zerstörungsfrei wieder ablösen lassen bestehend aus einer Mischung mit mindestens einem Blockcopolymer und mindestens einem Klebrigmacher.

Ferner betrifft die Erfindung die Verwendung der Haftklebemasse.

Elastisch oder plastisch hochdehnbare Selbstklebebänder, welche sich durch dehnendes Verstrecken in der Verklebungsebene rückstands- und zerstörungsfrei wieder ablösen lassen, sind beispielsweise aus der US 4,024,312 A, DE 33 31 016 C2, WO 92/01132 A1, WO 92/11333 A1, DE 42 22 849 C1, WO 95/06691 A1, DE 195 31 696 A1, DE 196 26 870 A1, DE 196 49 727 A1, DE 196 49 728 A1, DE 196 49 729 A1, DE 197 08 364 A1, DE 197 20 145 A1, DE 198 20 854 A1, WO 99/37729 A1 und DE 100 03 318 A1 bekannt und werden nachfolgend auch als stripfähige Selbstklebebänder bezeichnet.

Eingesetzt werden solche stripfähigen Selbstklebebänder häufig in Form von ein- oder beidseitig haftklebrigen Klebefolienstreifen, die bevorzugt einen nicht haftklebrigen Anfassbereich aufweisen, von welchem aus der Ablöseprozess eingeleitet wird.

Besondere Anwendungen entsprechender Selbstklebebänder finden sich in der DE 42 33 872 A1, DE 195 11 288 A1, US 5,507,464 A, US 5,672,402 A und WO 94/21157 A1, spezielle Ausführungsformen sind zum Beispiel in der DE 44 28 587 A1, DE 44 31 914 A1, WO 97/07172 A1, DE 196 27 400 A1, WO 98/03601 A1 und DE 196 49 636 A1, DE 197 20 526 A1, DE 197 23 177 A1, DE 297 23 198 A1, DE 197 26 375 A1, DE 197 56 084 A1, DE 197 56 816 A1, DE 198 42 864 A1, DE 198 42 865 A1, WO 99/31193 A1, WO 99/37729 A1 und WO 99/63018 A1 beschrieben.

Einsatzgebiete vorgenannter stripfähiger Klebfolienstreifen beinhalten insbesondere die rückstands- und zerstörungsfrei wieder ablösbare Fixierung leichter bis mittelschwerer Gegenstände im Wohn-, Arbeits- und Bürobereich. Sie ersetzen hierbei klassische Befestigungsmittel wie zum Beispiel Stecknadeln, Pin-Nadeln, Heftzwecken, Nägel, Schrauben, klassische Selbstklebebänder und Flüssigklebstoffe. Wesentlich für den erfolgreichen Einsatz der Klebefolienstreifen ist neben der Möglichkeit des rückstands- und zerstörungsfreien Wiederablösens verklebter Gegenstände deren einfache und schnelle Verklebung sowie für die vorgesehene Verklebungsdauer deren sicherer Halt. Hierbei ist insbesondere zu berücksichtigen, dass die Funktionsfähigkeit der Klebestreifen auf einer Vielzahl von Substraten gegeben sein muss, um als Universalfixierung im Wohn-, Arbeits- und Bürobereich dienen zu können.

Obwohl in der oben zitierten Patentliteratur eine breite Palette von Haftklebemassen für die Verwendung in stripfähigen Selbstklebebändern beschrieben werden, so weisen aktuell im Markt befindliche Handelsprodukte (zum Beispiel tesa® Powerstrips® der tesa AG, 3M Command® Adhesive Klebestreifen der Firma 3M sowie Plastofix® Formule Force 1000 Klebestreifen der Firma Plasto S.A.) sämtlichst Haftklebemassen auf Basis von Styrolblockcopolymeren mit im Elastomerblock ungesättigten Polydienblöcken auf.

Typischerweise finden lineare oder radiale Blockcopolymere auf Basis von Polystyrolblöcken und Polybutadienblöcken und/oder Polyisoprenblöcken also zum Beispiel radiale Styrol-Butadien- (SB)ₙ und/oder lineare Styrol-Butadien-Styrol- (SBS) und/oder lineare Styrol-Isopren-Styrolblockcopolymere (SIS) Verwendung. Vorteile vorgenannter styrolblockcopolymerbasierender Haftklebemassen für den Einsatz in stripfähigen Selbstklebebändern sind zum Beispiel die mit ihnen erreichbaren sehr hohen Verklebungsfestigkeiten (bedingt u.a. durch die gleichzeitige Realisierung einer sehr hohen Kohäsion und sehr hoher Klebkräfte), eine ausgeprägte Reduzierung der Haftklebrigkeit beim verstreckenden Ablösen (welches den Ablöseprozess deutlich erleichtert oder gar erst ermöglicht) sowie eine sehr hohe Zugfestigkeit, welche insbesondere für einen reißerfreien Ablöseprozess wesentlich ist.

Die im Markt befindlichen Produkte, welche sämtlich Haftklebemassen auf Basis von Styrolblockcopolymeren nutzen, zeigen Schwächen bei der Verklebungsfestigkeit unter Einfluss von Luftfeuchtigkeit oder Wasser. Besonders ausgeprägt ist dieses Verhalten bei Verklebungen auf hydrophilen Untergründen wie Glas oder Keramik. Insbesondere bei Feuchtigkeitseinwirkung kurz nach der Verklebung von mittelschweren Gegenständen kommt es häufig zum Versagen der Haftklebestreifen. Die Halteleistung wird unter Feuchtigkeitseinfluss besonders bei denjenigen Haftklebestreifen verringert, die unpolare Klebharze wie Kohlenwasserstoffharze oder Polyterpenharze enthalten.

Bei Produkten, die einen Schaumstoffzwischenträger enthalten, auf dem auf beiden Seiten Klebemasse aufgebracht wurde, ist die Abnahme der Verklebungsfestigkeit unter Feuchtigkeitseinwirkung stärker ausgeprägt, als bei Klebestreifen, die nur aus einer Klebemasseschicht bestehen.

Ein Versagen der Verklebung tritt bei einer reinen Schälbelastung und besonders bei einer Kippscherbelastung (bei der ein Drehmoment wirksam ist, wie zum Beispiel bei der Verklebung eines Hakens mit einem bestimmten Hebel, an den etwas angehängt wird) deutlich stärker auf, als bei einer reinen Scherbelastung.

Aufgabe der vorliegenden Erfindung ist es, eine Haftklebemasse für einen ein- oder beidseitig haftklebrigen Klebfolienstreifen vorzulegen, welcher sich durch dehnendes Verstrecken im wesentlichen parallel zur Verklebungsebene rückstands- und zerstörungsfrei auch von empfindlichen Untergründen wiederablösen lässt und welcher auch bei erhöhter Luftfeuchtigkeit gute Verklebungsfestigkeiten auch auf hydrophilen Untergründen wie Glas oder Keramik besitzt.

Die Aufgabe wird gelöst durch eine Haftklebemasse, wie sie im Hauptanspruch gezeigt ist. Vorteilhafte Weiterbildungen des Erfindungsgegenstands finden sich in den Unteransprüchen wieder.

Demgemäss betrifft die Erfindung eine Haftklebemasse bestehend aus einer Mischung mit mindestens einem Blockcopolymer und mindestens einem Klebrigmacher, bei der in die Mischung wenigstens ein in Wasser lösbares Polymer eingearbeitet ist.

Bei einer großen Anzahl von Haftklebemassen lässt die Verklebungsleistung unter dem Einfluss von hoher Luftfeuchtigkeit oder Wasser deutlich nach. Nicht nur, dass feuchte beziehungsweise nasse Klebestreifen deutlich schlechter oder gar nicht kleben, beziehungsweise man sie nur schwer auf nassen Untergründen verkleben kann, sondern bereits bestehende Verklebungen eines Klebebandes auf einem Untergrund können durch den Einfluss von Feuchtigkeit beziehungsweise Wasser in der Belastbarkeit verschlechtert werden, beziehungsweise ganz versagen. Dieses Phänomen ist besonders ausgeprägt bei hydrophilen Untergründen wie Glas oder Keramikprodukten wie Kacheln. Gerade Keramikkacheln findet man häufig in Badezimmer oder Küche, wo die Luftfeuchtigkeit kurzfristig sehr stark ansteigen kann. Hydrophile Untergründe besitzen die Eigenschaft, oftmals eine sehr dünne Schicht adsorbierten Wassers auf der Oberfläche gebunden zu haben, die erst bei sehr hohen Temperaturen entfernt werden kann. Durch diese dünne Wasserschicht kann Feuchtigkeit oder Wasser von Glas sehr leicht aufgenommen werden. Durch die molekulare Struktur des Glases ist dieses sogar in der Lage, Wasser auch im Glas selber aufzunehmen und nicht nur an der Oberfläche zu absorbieren. Ähnliches gilt auch für Keramikprodukte.

Wird nun ein Klebeband auf Keramikprodukten oder Glas verklebt, bleibt eine dünne Wasserschicht zwischen dem Klebeband und dem Glas bestehen. Diese Schicht ist so dünn, dass die Verklebungseigenschaften des Klebebandes nicht beeinflusst werden, der Verbund zwischen Klebeband und Glas kann sehr stark sein, ähnlich dem von Stahl und dem selben Klebeband.

Wirkt auf die Verklebung Feuchtigkeit in Form von hoher Luftfeuchtigkeit oder Wasser ein, kann die Wasserschicht zwischen Glas und Klebestreifen weiteres Wasser aufnehmen, wodurch die Schicht anwächst. Wasser kann auch durch das Glas an die Verklebungsfläche diffundieren. Die Verklebungsleistung nimmt dadurch in der Art ab, dass es zum Versagen der Verklebung führen kann.

Für Klebmassen, die auch unter diesen Bedingungen gut kleben werden standardmäßig sehr weiche Klebemassen verwendet, die alle Poren des Glases verschließen können, so dass das Wasser nicht mehr in die Zwischenschicht hineindiffundieren kann. Dieser Weg wird zum Beispiel bei der Verklebung von Doppelglasscheiben beschritten, wo ein Isobutylkautschukkleber zum Einsatz kommt (laut Skeist, "Handbook of Adhesives", 2. Auflage, 1977).

Für stripfähige Systeme wie sie oben beschrieben werden, ist dieser Weg nicht möglich, wenn die Klebestreifen eine sehr hohe Verklebungsfestigkeit bieten sollen und auch durch Ziehen in der Verklebungsebene zerstörungsfrei wieder entfernbar sein sollen. Diese beiden Eigenschaften sind nur zu erreichen, wenn die Klebemasse eine hohe Kohäsion und hohe Reißfestigkeit besitzt, das heißt, die Klebemasse muss verhältnismäßig hart eingestellt werden. Dadurch können die beschriebenen Klebemassen nicht so exzellent auf das Glas oder die Keramik aufziehen, dass alle Poren des Glases verschlossen werden. Wasser kann daher in den Zwischenraum eindringen und zum Versagen der Verklebung führen. Besonders stark ausgeprägt ist dieser Effekt bei Verwendung von Klebestreifen mit einem Schaumstoffzwischenträger. Wasser oder Feuchtigkeit dringen hier sehr viel schneller ein als bei Klebestreifen, die nur aus dieser Klebemasse bestehen ohne Verwendung eines solchen Zwischenträgers.

Überraschenderweise wurde gefunden, dass durch die Zugabe von in Wasser löslichen Polymeren die Halteleistung der Klebestreifen unter Feuchtigkeit auf hydrophilen Untergründen deutlich gesteigert werden kann.
Wahrscheinlich verlangsamen die wasserlöslichen Polymere ein Eindringen von Feuchtigkeit in die Grenzfläche zwischen Haftklebestreifen und Untergrund.
Solche in Wasser lösbare Verbindungen können zum Beispiel Natriumsalze der Polyacrylsäure oder Polyvinylpyrolidon sein. Diese Polymere beginnen in Wasser erst zu quellen und lösen sich dann bei Anwesenheit von genügend Wasser vollständig auf. Bei Einwirkung von Luftfeuchtigkeit oder kurzzeitiger Einwirkung von Wasser werden die löslichen Polymere nur angequollen, eine vollständige Auflösung findet nicht mehr statt.

In einer bevorzugten Ausführungsform der Erfindung sind die wasserlöslichen Polymere weder physikalisch noch chemisch vernetzt. Unvernetzte Polymere haben den Vorteil, dass sie besser in die Klebmasse eingearbeitet werden können, sowohl bei einem Prozess aus der Lösung als auch bei einer Compoundierung aus der Schmelze.

Die wasserlöslichen Polymere sind bevorzugt in einem Bereich zwischen 0,5 bis 20 Gew.-% und besonders bevorzugt zwischen 2 bis 8 Gew.-% bezogen auf die Haftklebemasse enthalten. Die Zugabe geringer Menge an wasserlöslichen Polymeren hat den Vorteil, dass die mechanischen und klebtechnischen Eigenschaften der Haftklebestreifen auf trockenen Untergründen nicht in der Art verändert werden, dass der eigentliche Einsatzzweck eingeschränkt wird.

Die wasserlöslichen Polymere können auf unterschiedlicher chemischer Basis eingesetzt werden, wie zum Beispiel Natriumsalze der Polyacrylsäure, stärkemodifizierte Polyacrylsäure, Polyacrylamide, Polysulfonsäure, Polyvinylpyrolidon, Polyvinylalkohol oder Carboxymethylcellulose. Die wasserlöslichen Polymere sind in der Lage, Wasser aufzunehmen, und aufzuquellen. Sie lassen sich zum Teil in organischen Lösungsmitteln lösen und/oder in der Hitze aufschmelzen, wodurch sie gut in die Klebmassen eingearbeitet werden können.
Die wasserlöslichen Polymere liegen in der Klebmasse entweder gelöst oder dispergiert vor.
Da sie nur in geringer Konzentration vorhanden sind und kaum Wechselwirkungen mit den anderen Rohstoffen eingehen, haben sie nur einen geringen Einfluss auf die mechanischen Eigenschaften von mit der Haftklebemasse gebildeten Haftklebestreifen. Die klebtechnischen Eigenschaften im Trockenen zeigen ebenfalls keinen Einfluss bei der Zugabe dieser Polymere.

Schon in einer Konzentration von 1 Gew.-% wasserlösliches Polymer bezogen auf die Gesamtklebemasse ist eine Verringerung bei der Feuchtigkeitsempfindlichkeit zu erzielen. Die Menge an wasserlöslichem Polymer, die für eine ausreichende Klebleistung nötig ist, hängt dabei von der Art des Polymers, von der Härte der Klebemasse, von dem zu erreichenden Leistungsvermögen und auch vom Untergrund ab, um nur einige Einflüsse zu nennen.

Ferner umfasst die Erfindung die Verwendung der Haftklebemasse zur Herstellung eines ein- und/oder beidseitigen haftklebrigen Klebefolienstreifens.

Als Haftklebemassen finden solche auf Basis von Blockcopolymeren enthaltenden Polymerblöcke gebildet von Vinylaromaten (A-Blöcke), wie zum Beispiel Styrol und solchen gebildet durch Polymerisation von 1,3-Dienen (B-Blöcke), wie zum Beispiel Butadien und Isopren Anwendung. Resultierende Blockcopolymere können gleiche oder unterschiedliche D-Blöcke enthalten, die teilweise, selektiv oder vollständig hydriert sein können. Blockcopolymere können lineare A-B-A Struktur aufweisen. Einsetzbar sind ebenfalls Blockcopolymere von radialer Gestalt sowie sternförmige und lineare Multiblockcopolymere. Als weitere Komponente können A-B Zweiblockcopolymere vorhanden sein. Blockcopolymere von Vinylaromaten und Isobutylen sind ebenfalls einsetzbar. Sämtliche der vorgenannten Polymere können allein oder im Gemisch miteinander genutzt werden.

Anstelle von Polystyrolblöcken können auch Polymerblöcke auf Basis anderer aromatenhaltiger Homo- und Copolymere (C8- bis C12-Aromaten) mit Glasübergangstemperaturen von > ca. 75 °C genutzt werden, wie zum Beispiel α-methylstyrolhaltige Aromatenblöcke. Gleichfalls sind Polymerblöcke auf Basis von (Meth)acrylathomo- und (Meth)acrylatcopolymeren mit Glasübergangstemperaturen von > 75 °C nutzbar. Hierbei können sowohl Blockcopolymere zum Einsatz kommen, welche als Hartblöcke ausschließlich solche auf Basis von (Meth)acrylatpolymeren nutzen als auch solche, welche sowohl Polyaromatenblöcke, zum Beispiel Polystyrolblöcke, als auch Poly(meth)acrylatblöcke nutzen.

Anstelle von Styrol-Butadien-Blockcopolymeren und Styrol-Isopren-Blockcopolymeren und deren Hydrierungsprodukten, mithin Styrol-Ethylen/Butylen-Blockcopolymere und Styrol-Ethylen/Propylen-Blockcopolymere, können ebenfalls Blockcopolymere und deren Hydrierungsprodukte genutzt werden, welche weitere polydienhaltige Elastomerblöcke nutzen, wie zum Beispiel Copolymere mehrerer unterschiedlicher 1,3-Diene. Verwendbar sind des weiteren funktionalisierte Blockcopolymere, bei denen das Blockcopolymer ein maleinsäureanhydridmodifiziertes oder silanmodifiziertes Styrolblockcopolymer ist.

Typische Einsatzkonzentrationen für das Blockcopolymer liegen in einer Konzentration im Bereich zwischen 20 Gew.-% und 70 Gew.-%, insbesondere im Bereich zwischen 30 Gew.-% und 60 Gew.-% und besonders bevorzugt im Bereich von 35 Gew.-% und 55 Gew.-%, vor.

Als weitere Polymere können solche auf Basis reiner Kohlenwasserstoffe, zum Beispiel ungesättigte Polydiene, wie natürliche oder synthetisch erzeugtes Polyisopren oder Polybutadien, chemisch im wesentlichen gesättigte Elastomere, wie zum Beispiel ein gesättigtes Ethylen-Propylen-Copolymer, ein α-Olefincopolymer, ein Polyisobutylen, ein Butylkautschuk, ein Ethylen-Propylenkautschuk, oder ein chemisch funktionalisierter Kohlenwasserstoff, wie ein halogenhaltiges, acrylathaltiges oder vinyletherhaltiges Polyolefin enthalten sein, die die vinylaromatenhaltigen Blockcopolymere bis zu ca. 100 phr (parts per hundred parts of resin) bezogen auf das Styrolblockcopolymer ersetzen können.

Die Haftklebemasse kann durch chemische, insbesondere strahlenchemische, zum Beispiel durch UV-Bestrahlung, oder durch Bestrahlung mittels schneller Elektronen, vemetzt werden.

Haftklebemassen der vorliegenden Erfindung sind optional solche, deren Haftklebrigkeit erst durch thermische oder Lösemittelaktivierung erzeugt wird.

Geeignete Haftklebemassen sind neben den zuvor beschriebenen auf Basis vinylaromatenhaltiger Blockcopolymere all solche, welche über eine für den Ablöseprozess ausreichende Reißfestigkeit, Kohäsion und Dehnung verfügen. Entsprechende Haftklebemassen können allein oder in Kombination mit solchen auf Basis vinylaromatenhaltiger Blockcopolymere eingesetzt werden.

Der Klebrigmacher ist ein Klebharz, das mit dem Elastomerblock der Styrolblockcopolymere verträglich ist. Geeignete Klebharze sind u.a. vorzugsweise nicht hydrierte, partiell oder vollständig hydrierte Harze auf Basis von Kolophonium oder Kolophoniumderivaten, hydrierte Polymerisate des Dicyclopentadiens, nicht hydrierte, partiell, selektiv oder vollständig hydrierte Kohlenwasserstoffharze auf Basis von C5-, C5-/C9- oder C9-Monomerströmen, Polyterpenharze auf Basis von α-Pinen und/oder β-Pinen und/oder δ-Limonen, ein hydriertes Polymerisat reiner C8- oder C9-Aromaten. Vorgenannte Klebharze können sowohl allein als auch im Gemisch eingesetzt werden.

Vorzugsweise enthält die Mischung wenigstens ein Additiv. Zur Stabilisierung der Haftklebemassen werden üblicherweise Antioxidantien zugesetzt. Additive können primäre oder sekundäre Antioxidantien sein, insbesondere kommen als primäre Antioxidantien sterisch gehinderte Phenole und als sekundäre Antioxidantien Phosphite oder Thiole zum Einsatz. Auch C-Radikalfänger können zugesetzt werden.

Als Additiv können auch Lichtschutzmittel verwendet werden, wie zum Beispiel UV-Absorber oder sterisch gehinderte Amine. Ebenfalls können Antiozonantien, Metalldesaktivatoren, Verarbeitungshilfsmittel oder endblockverstärkende Harze zugesetzt werden.

Weitere mögliche Additive können Plastifizierungsmittel sein. Als Plastifizierungsmittel können Flüssigharze, Weichmacheröle oder niedermolekulares flüssige Polymere, die ein niedermolekulares Polyisobutylen mit einer Molmasse < 1500 g/mol oder einen flüssigen EPDM (Ethylen/Propylen-Dien-Terpolymer)-Typ mit einem maximalen Mengenanteil von 20 Gew.-% besitzen, verwendet werden.

Füllstoffe, wie zum Beispiel Siliziumdioxid, Glas (gemahlen oder in Form von Kugeln), Aluminiumoxid, Zinkoxid, Calciumcarbonat, Titandioxid oder Ruß, um nur einige zu nennen, ebenso Farbpigmente und Farbstoffe sowie optische Aufheller können ebenfalls verwendet werden.

Erfindungsgemäße Haftklebemassen können sowohl für einschichtige durch dehnendes Verstrecken rückstands- und zerstörungsfrei wiederablösbare Selbstklebebänder (zum Beispiel entsprechend DE 33 31 016 C2, DE 42 22 849 C1 oder WO 98/03601 A1) als auch für mehrschichtige Selbstklebebänder ohne oder mit Schaumstoffzwischenträger (zum Beispiel entsprechend DE 197 08 366 A1, DE 198 20 858 A1, WO 92/11333 A1, DE 196 49 727 A1, DE 196 49 728 A1, DE 196 49 729 A1, DE 197 20 145 A1, US 5,516,581 A oder WO 95/06691 A1) verwendet werden. Im Falle der Verwendung in mehrschichtigen Selbstklebebändern entsprechend der DE 197 08 366 A1 bilden Haftklebemassen die Außenschichten der Klebestreifen. Klebestreifen können entsprechend DE 44 28 587 C2 und US 5,925,459 A ausgeformt beziehungsweise gemäß DE 44 31 914 C2 modifiziert sein. Die Haftklebemasse kann ebenfalls in Produkten entsprechend der DE 43 39 604 C2 genutzt werden.

Geeignete Zwischenträger beinhalten beispielsweise schaumstoffhaltige Trägermaterialien (Schaumstoffzwischenräger), insbesondere Homo- und Copolymere des Ethylens, insbesondere Polyethylene niederer und sehr niederer Dichte (LDPE, LLDPE, VLDPE), Ethylen-Vinylacetat-Copolymere, sowie Gemische vorgenannter Polymere. Weitere Polymere können unter anderem sein: Polyvinylacetate, Polypropylene, Polyurethane auf Basis aromatischer und aliphatischer Diisocyanate, Polystyrol, schlagzähmodifizierte Polystyrole, PVC, Acrylatcopolymere. Schaumstoffe können vernetzt oder unvernetzt zum Einsatz kommen.

Die Dicken der eingesetzten Schaumstoffe liegen insbesondere zwischen 175 µm und 10 mm, bevorzugt zwischen 250 µm und 5 mm, besonders bevorzugt zwischen 350 µm und 3 mm. Raumdichten betragen 20 bis 400 kg/m³, bevorzugt 25 bis 250 kg/m³, besonders bevorzugt von 25 bis 150 kg/m³. Die Schaumstruktur kann geschlossenzellig, offenzellig oder gemischtzellig sein. Genutzt werden können verhautete oder nicht verhautete Schäume von integraler oder nicht integraler Struktur. Erfindungsgemäß einsetzbar sind ebenfalls Laminate mehrerer Schaumstoffe.

Zur Erzeugung einer ausreichenden Verankerung der eingesetzten Haftklebemassen auf den Schaumstoffen werden diese vorteilhaft bei der Herstellung und/oder vor ihrer Beschichtung mit Haftklebstoff einer Vorbehandlung unterzogen. Geeignete Vorbehandlungsverfahren sind u. a. die Fluorvorbehandlung, die Coronavorbehandlung, die Plasmavorbehandlung und die Flammvorbehandlung, letztere insbesondere mittels elektrisch polarisierter Flamme. Vorbehandlungsmethoden können alleine oder in Kombination angewandt werden. Bei verhauteten Schäumen und bei Integralschäumen kann zur weiteren Verbesserung der Klebmasseverankerung eine Primerung des Schaumes durchgeführt werden.

Offenzellige und gemischtzellige Schäume können einer Imprägnierung unterzogen sein. Zwischen Schaumstoff und Haftklebemassen kann optional eine Sperrschicht integriert sein, um die Wanderung migrationsfähiger Materialien zwischen Haftklebemassen und Schaumstoff zu reduzieren.

### Herstellung der Haftklebemassen

Die Herstellung und Verarbeitung der Haftklebemassen kann aus Lösung sowie aus der Schmelze erfolgen. Als Vorteilhaft hat sich hierbei die Fertigung der Klebemasse aus der Schmelze herausgestellt. Für den letzteren Fall umfassen geeignete Herstellprozesse sowohl Batchverfahren als auch kontinuierliche Verfahren. Hierbei bietet sich die kontinuierliche Fertigung der Haftklebemasse mit Hilfe eines Extruders an.

### Konfektionierung

Typische Konfektionierformen der die erfindungsgemäßen Haftklebemasse nutzenden Selbstklebebänder sind Klebebandrollen sowie Klebestreifen, wie sie zum Beispiel in Form von Stanzlingen erhalten werden. Optional enthalten Stanzlinge einen nicht haftklebrigen Anfasserbereich, von welchem aus der Ablöseprozess ausgeführt werden kann.

Einseitig haftklebrige Selbstklebebänder können hierbei zum Beispiel durch einseitige Inertisierung zuvor genannter beidseitig haftklebriger Selbstklebebänder beziehungsweise Selbstklebestreifen erhalten sein.

Im folgenden wird die Erfindung anhand von Beispielen näher erklärt, ohne damit die Erfindung in irgendeiner Form beschränken zu wollen.

Wie oben beschreiben werden Haftklebestreifen bestehend aus folgenden Bestandteilen hergestellt:

### Beispiel 1:

| | | |
|---|---|---|
| 100 Teile | Kraton D 1165 | SIS mit 30 % Blockpolystyrolgehalt der Firma Kraton Polymers |
| 100 Teile | Escorez 1310 | KW-Harz mit einem Erweichungspunkt von 94°C der Firma Exxon |
| 0,5 Teile | Irganox 1010 | Alterungsschutzmittel der Firma Ciba-Geigy |
| 5 Teile | Pigmentverteiler N | Natriumsalz der Polyacrylsäure der Firma BASF |

### Vergleichsbeispiel C1:

| | | |
|---|---|---|
| 100 Teile | Kraton D 1165 | SIS mit 30 % Blockpolystyrolgehalt der Firma Kraton Polymers |
| 100 Teile | Escorez 1310 | KW-Harz mit einem Erweichungspunkt von 94°C der Firma Exxon |
| 0,5 Teile | Irganox 1010 | Alterungsschutzmittel der Firma Ciba-Geigy |

### Beispiel 2:

| | | |
|---|---|---|
| 100 Teile | Vector 8508 | SBS mit 30 % Blockpolystyrolgehalt der Firma Dexco |
| 100 Teile | Piccolyte A 115 | α-Pinen-Harz mit einem Erweichungspunkt von 115 °C der Firma Hercules |
| 0,5 Teile | Irganox 1010 | Alterungsschutzmittel der Firma Ciba-Geigy |
| 5 Teile | Rhodoviol | Polyvinylalkohol der Fa. Rhodia PPMC |

### Vergleichsbeispiel C2:

| | | |
|---|---|---|
| 100 Teile | Vector 8508 | SBS mit 30 % Blockpolystyrolgehalt der Firma Dexco |
| 100 Teile | Piccolyte A 115 | α-Pinen-Harz mit einem Erweichungspunkt von 115 °C der Firma Hercules |
| 0,5 Teile | Irganox 1010 | Alterungsschutzmittel der Firma Ciba-Geigy |

**Tabelle 1: Mechanische und klebtechnische Daten**

| Beispiel Nr. | Zugfestigkeit | Stripspannung | Schälgeschwindigkeit | Kippscherstandzeit |
|---|---|---|---|---|
| | in MPa | In MPa | In mm/24h | in Tagen |
| 1 | 8,7 | 1,6 | 17 | 24 |
| C1 | 8,4 | 1,6 | 20 | 27 |
| 2 | 13,6 | 2,3 | 16 | > 60 |
| C2 | 13,0 | 2,1 | 13 | > 60 |

Die Tabelle 1 zeigt mechanische und klebtechnische Daten für die vorbeschriebenen Beispiele. Wie aus den gemessenen Werten für die Vergleichsbeispiele zu erkennen ist, hat das wasserlösliche Polymer keinen Einfluss auf die mechanischen Eigenschaften und die klebtechnischen Eigenschaften bei Verklebungen im Trockenen.

**Tabelle 2: Verklebungsleistungen unter Einwirkung von Feuchtigkeit**

| Beispiel Nr. | Schälgeschwindigkeit | Kippscherstandzeit |
|---|---|---|
| | in mm/24h unter Feuchtigkeit | in Tagen unter Feuchtigkeit |
| 1 | 15 | 10 |
| C1 | > 40 | < 1 |
| 2 | 24 | >30 |
| C2 | > 40 | 3 |

Die Tabelle 2 zeigt Verklebungsleistungen unter Einwirkung von Feuchtigkeit. Durch die Zugabe eines wasserlöslichen Polymers sind die Verklebungsleistungen unter Feuchtigkeitseinfluss auf hydrophilen Untergründen deutlich verbessert worden. Bereits geringe Mengen sind ausreichend, um den gewünschten Effekt zu erzielen.

Die mechanischen und klebtechnischen Daten wurden wie folgt ermittelt:

### Zugfestigkeit beziehungsweise max. Dehnung

Die Zugfestigkeit beziehungsweise max. Dehnung wurde in Anlehnung an DIN 53504 unter Verwendung von Schulterstäben der Größe S3 bei einer Separationsgeschwindigkeit von 300 mm pro Minute gemessen.

### Ablösekraft

Die Ablösekraft (Stripkraft beziehungsweise Stripspannung) wurde mit Hilfe einer Klebstoff-Folie mit den Abmessungen 50 mm Länge x 20 mm Breite mit einem am oberen Ende nicht haftklebrigen Anfasserbereich ermittelt. Die Klebstoff-Folie wurde zwischen zwei deckungsgleich zueinander angeordneten Stahlplatten mit einer Abmessung von 50 mm x 30 mm mit einem Anpressdruck von jeweils 50 Newton verklebt. Die Stahlplatten haben an ihrem unteren Ende je eine Bohrung zur Aufnahme eines S-förmigen Stahlhakens. Das untere Ende des Stahlhakens trägt eine weitere Stahlplatte, über welche die Prüfanordnung zur Messung in der unteren Klemmbacke einer Zugprüfmaschine fixiert werden kann. Die Verklebungen werden für eine Dauer von 24 Stunden bei + 40 °C gelagert. Nach der Rekonditionierung auf Raumtemperatur wird der Klebfolienstreifen mit einer Zuggeschwindigkeit von 1000 mm pro Minute parallel zur Verklebungsebene und kontaktfrei zu den Kantenbereichen der beiden Stahlplatten herausgelöst. Dabei wird die erforderliche Ablösekraft in Newton (N) gemessen. Angegeben wird der Mittelwert der Stripspannungswerte (in N pro mm²), gemessen in dem Bereich, in welchem der Klebestreifen auf einer Verklebungslänge zwischen 10 mm und 40 mm von den Stahluntergründen abgelöst ist.

### Schälfestigkeit

Zur Ermittlung der Schälfestigkeit werden die zu untersuchenden Haftklebestreifenmuster einseitig vollflächig mit einer 23 µm starken PET-Folie (beispielsweise Hostaphan RN 25; Mitsubishi Chemicals) luftblasenfrei einkaschiert. Danach wird die zweite Klebfolienstreifenseite an einem Ende mit einem ca. 6 mm langen Folienstreifen (ebenfalls Hostaphan RN 25) abgedeckt, so dass an diesem Ende ein beidseitig nicht haftklebriger Anfasserbereich entsteht. Hiernach wird der zu prüfende Klebfolienstreifen vorderseitig mit leichtem Fingerandruck auf den Prüfuntergrund (gestrichene Raufasertapete: Tapete = Erfurt Körning 52, Farbe = Herbol Zenit LG, Tapete verklebt auf Pressspanplatte) aufgeklebt. Die Haftklebfolienmuster werden anschließend 10 Sekunden lang bei einem Anpressdruck von 90 N pro 10 cm² Haftklebefläche angedrückt. Danach werden die Haftklebemuster 15 Minuten bei 40 °C konditioniert. Die Prüfplatten werden anschließend horizontal fixiert, so dass der Klebestreifen nach unten gerichtet ist. An den nicht klebenden Anfasser wird mit Hilfe einer Klemme (20 g) ein Gewicht von 50 g befestigt, so dass die entstehende Schälbelastung (ca. 0,7 N pro 20 mm Klebstreifenbreite) orthogonal zur Verklebungsebene wirkt. Nach einer Testphase von 15 Minuten und wiederholt nach weiteren 24 Stunden wird diejenige Strecke markiert, die der Klebestreifen vom Verklebungsuntergrund seit Versuchsbeginn abgeschält ist. Der Abstand zwischen den beiden Markierungen wird als Schälweg (Einheit: mm pro 24 Stunden) angegeben.

### Kippscherfestigkeit

Zur Bestimmung der Kippscherfestigkeit wird die zu prüfende Klebstoff-Folie der Abmessung 20 mm x 50 mm, die an einem Ende beidseitig mit einem nicht haftklebrigen Anfasserbereich versehen ist (erhalten durch Aufkaschieren von 25 µm starker biaxial verstreckter Polyesterfolie der Abmessungen 20 mm x 13 mm (Hostaphan RN 25)) mittig auf eine hochglanzpolierte quadratische Stahlplatte der Abmessung 40 mm Länge x 40 mm Breite x 3 mm Dicke verklebt. Die Stahlplatte ist rückseitig mittig mit einem 10 cm langen Stahlstift versehen, welcher vertikal auf der Plattenfläche sitzt. Die erhaltenen Probekörper werden mit einer Kraft von 100 N auf den zu prüfenden Haftgrund (Stahl) mit einer Andruckzeit von 5 Sekunden verklebt und 5 Minuten im unbelasteten Zustand belassen. Nach Beaufschlagung der gewählten Kippscherbelastung durch Anhängen eines Gewichtes (20 N bei 50 mm Hebelarm) wird die Zeit bis zum Versagen der Verklebung (Kippscherstandzeit) ermittelt. Das Testklima ist dabei 23°C bei einer relativen Luftfeuchtigkeit von 50 %.

### Kippscherfestigkeit (Kippscherstandzeiten) unter Feuchtigkeitseinfluss

Die Messung der Kippscherfestigkeit unter dem Einfluss von Feuchtigkeit erfolgt wie oben beschrieben mit der Ausnahme, dass die Messung unter einer relativen Luftfeuchtigkeit von 85 % bei einer Temperatur von 35 °C durchgeführt wird. Als Testgrund werden Fensterglasplatten der Stärke 4 mm verwendet, die vorher mit Ethylacetat und Ethanol gereinigt wurden. Die Verklebung und Probenpräparation ist identisch mit der Bestimmung der Kippscherfestigkeit bei Normalklima. Als Belastung wird ein Gewicht von 10 N bei einem Hebel von 50 mm verwendet

### Schälgeschwindigkeit unter Feuchtigkeitseinfluss

Die Messung der Schälgeschwindigkeit unter dem Einfluss von Feuchtigkeit erfolgt wie oben unter Schälfestigkeit beschrieben mit der Ausnahme, dass die Messung unter einer relativen Luftfeuchtigkeit von 85 % bei einer Temperatur von 35 °C durchgeführt wird. Als Testgrund werden Fensterglasplatten der Stärke 4 mm verwendet, die vorher mit Ethylacetat und Ethanol gereinigt wurden. Die Verklebung und Probenpräparation ist identisch mit der Bestimmung der Schälfestigkeit im Normalklima. Die Belastung beträgt 70 g. Die Bestimmung des Schälweges erfolgt in mm/24h.

### Herstellung der Prüfkörper

### Herstellung der Haftklebestreifen:

Haftklebemassen werden in einem heizbaren Kneter mit Sigma-Schaufel (Werner & Pfleiderer LUK 1,0 K3 ausgerüstet mit einem Thermostaten LTH 303 der Firma mgw LAUDA) bei einer Temperatur von ca. 160 bis 180° C und unter Inertisierung mit Kohlendioxid als Schutzgas zu einer homogenen Mischung verarbeitet. Nach dem Erkalten werden durch ca. zehnminütiges Verpressen der Klebemasse bei 120 bis 140° C (temperierbare Presse: Typ KHL 50 der Firma Bucher-Guyer) einschichtige Klebstoff-Folienstücke der Dicke 700 µm (50 µm Mittelwert (2-fache Standardabweichung)) hergestellt. Einschichtige Haftklebestreifen der gewünschten Abmessungen werden durch Ausstanzen erhalten. Im Falle der Herstellung mehrschichtiger Haftklebestreifen werden die entsprechenden Schichten zuvor durch Kaschierung (gegebenenfalls durch Heißkaschierung) verbunden und danach die Klebestreifen durch Ausstanzen vereinzelt.

## Patentansprüche

1. Verwendung einer Haftklebemasse zur Herstellung eines ein- und/oder beidseitigen haftklebrigen Klebefolienstreifens, welcher sich durch dehnendes Verstrecken in der Verklebungsebene rückstands- und zerstörungsfrei wieder ablösen lässt, bestehend aus einer Mischung mit mindestens einem Blockcopolymer und mindestens einem Klebrigmacher **dadurch gekennzeichnet, dass** die Mischung wenigstens ein in Wasser lösliches Polymer enthält.

2. Verwendung nach Anspruch 1, **dadurch gekennzeichnet, dass** das wasserlösliche Polymer in einem Bereich zwischen 0,5 bis 20 Gew.-% bezogen auf die Haftklebemasse enthalten ist.

3. Verwendung nach zumindest einem der Ansprüche 1 oder 2, **dadurch gekennzeichnet, dass** das wasserlösliche Polymer in einem Bereich zwischen 2 bis 8 Gew.-% bezogen auf die Haftklebemasse enthalten ist.

4. Verwendung nach zumindest einem der Ansprüche 1 bis 3, **dadurch gekennzeichnet, dass** das wasserlösliche Polymer ein Natriumsalz einer Polyacrylsäure, eine stärkemodifizierte Polyacrylsäure, ein Polyacrylamid, eine Polysulfonsäure, Polyvinylpyrolidon, Polyvinylalkohol oder Carboxymethylcellulose ist.

5. Verwendung nach zumindest einem der Ansprüche 1 bis 4, **dadurch gekennzeichnet, dass** die Mischung wenigstens ein Additiv wie ein Antioxidant, Lichtschutzmittel und/oder Plastifizierungsmittel enthält.

6. Verwendung nach zumindest einem der Ansprüche 1 bis 4, **dadurch gekennzeichnet, dass** die Mischung wenigstens einen Füllstoff wie Siliziumdioxid, Glas (gemahlen oder in Form von Kugeln), Aluminiumoxid, Zinkoxid, Calciumcarbonat, Titandioxid und/oder Ruß enthält.

## Claims

1. Use of a pressure sensitive adhesive for producing a single-sided and/or double-sided adhesive sheet strip which can be redetached without residue or destruction by extensive stretching in the plane of the bond, composed of a mixture comprising at least one block copolymer and at least one tackifier, **characterized in that** the mixture comprises at least one polymer soluble in water.

2. Use according to Claim 1, **characterized in that** the water-soluble polymer is present in a range between 0.5 to 20% by weight, based on the pressure sensitive adhesive.

3. Use according to at least one of Claims 1 and 2, **characterized in that** the water-soluble polymer is present in a range between 2 to 8% by weight, based on the adhesive.

4. Use according to at least one of Claims 1 to 3, **characterized in that** the water-soluble polymer is a sodium salt of a polyacrylic acid, a starch-modified polyacrylic acid, a polyacrylamide, a polysulphonic acid, polyvinylpyrrolidone, polyvinyl alcohol or carboxymethylcellulose.

5. Use according to at least one of Claims 1 to 4, **characterized in that** the mixture comprises at least one additive such as an antioxidant, light stabilizer and/or plasticizer.

6. Use according to at least one of Claims 1 to 4, **characterized in that** the mixture comprises at least one filler, such as silica, glass (ground or in the form of beads), alumina, zinc oxide, calcium carbonate, titanium dioxide and/or carbon black.

## Revendications

1. Utilisation d'une masse autoadhésive pour la préparation de bandes de feuille de collage autoadhésives sur une et/ou sur les deux faces, qui peuvent être à nouveau détachées par étirement d'allongement dans le plan de collage sans laisser de résidus et sans endommagement, consistant en un mélange d'au moins un copolymère bloc et d'au moins un agent donnant du collant, **caractérisée en ce** le mélange contient au moins un polymère soluble dans l'eau.

2. Utilisation selon la revendication 1, **caractérisée en ce que** le polymère soluble dans l'eau est contenu en une quantité de l'ordre de 0,5 à 20% en poids, par rapport à la masse autoadhésive.

3. Utilisation selon au moins une des revendications 1 et 2, **caractérisée en ce que** le polymère soluble dans l'eau est contenu en une quantité de l'ordre de 2 à 8% en poids, par rapport à la masse autoadhésive.

4. Utilisation selon au moins une des revendications 1 à 3, **caractérisée en ce que** le polymère soluble dans l'eau est un sel de sodium d'un poly(acide acrylique), un poly(acide acrylique) modifié par de l'amidon, un polyacrylamide, un poly(acide sulfonique), de la polyvinylpyrrolidone, de l'alcool polyvinylique ou de la carboxyméthylcellulose.

5. Utilisation selon au moins une des revendications 1 à 4, **caractérisée en ce que** le mélange contient au moins un additif, comme un antioxydant, un agent photoprotecteur et/ou un agent plastifiant.

6. Utilisation selon au moins une des revendications 1 à 4, **caractérisée en ce que** le mélange contient au moins une charge comme du dioxyde de silicium, du verre (broyé ou sous forme de billes), de l'oxyde d'aluminium, de l'oxyde de zinc, du carbonate de calcium, du dioxyde de titane et/ou du noir de carbone.
